# EUROPÄISCHE PATENTSCHRIFT

(11) **EP 3 331 652 B1**
(45) Veröffentlichungstag und Bekanntmachung des Hinweises auf die Patenterteilung: **20.11.2019**
(21) Anmeldenummer: 16756611.6
(22) Anmeldetag: 04.08.2016
(51) Int. Cl.: B05D 3/06

(54) **UV-BESTRAHLUNGSAGGREGAT ZUR STRAHLUNGSHÄRTUNG**
UV IRRADIATION UNIT FOR RADIATION CURING
ENSEMBLE DE RAYONNEMENT UV DESTINÉ AU DURCISSEMENT SOUS RAYONNEMENT

(30) Priorität: 04.08.2015 DE 102015214885
(43) Veröffentlichungstag der Anmeldung: 13.06.2018
(73) Patentinhaber: IST METZ GmbH, 72622 Nürtingen (DE)
(72) Erfinder: SCHMITT, Peter, 97074 Würzburg (DE); EBINGER, Klaus, 73249 Wernau (DE); CREMER, Ruben, 72658 Bempflingen (DE); SCHOLDT, Manfred, 73230 Kirchheim (DE)
(74) Vertreter: Pfiz, Thomas
(86) Internationale Anmeldenummer: PCT/EP2016/068679
(87) Internationale Veröffentlichungsnummer: WO 2017/021504

(56) Entgegenhaltungen:
- EP-A2- 1 089 069
- JP-A- 2009 205 968
- KR-B1- 101 223 958
- US-A1- 2011 299 135

## Beschreibung

Die Erfindung betrifft ein UV-Bestrahlungsaggregat zur Strahlungshärtung einer Polymerschicht, insbesondere einer auf einem Substrat befindlichen Druckfarben- oder Lackschicht, mit einer auf einer Trägerfläche angeordneten LED-Anordnung, die zur UV-Bestrahlung eines der Trägerfläche gegenüberliegenden Arbeitsbereichs eine Vielzahl von im UV-Bereich emittierenden, gehäuselosen LED-Chips umfasst, wobei die LED-Chips mindestens einen linearen LED-Strang bilden.

Beim Einsatz von LED's zur Härtung von Photopolymeren, beispielsweise zur Polymerisation von Druckfarben, Lacken oder Klebstoffen werden sehr hohe Gesamtleistungen benötigt, so dass es erforderlich ist, die zur Verfügung stehende optische Leistung möglichst vollständig auf die Arbeitsebene zu leiten. Darüber hinaus ist es häufig erforderlich oder gewünscht, die zur Verfügung stehende Strahlungsleistung in einen Flächenbereich homogen zu konzentrieren, um so einen möglichst effizienten Härtungsprozess zu erzielen. Weiterhin sollte eine möglichst hohe Strahlungsintensität und Strahlungsdosis bereitgestellt werden, um so hohe Prozessgeschwindigkeiten während der Produktion zu ermöglichen. Im Unterschied zur üblichen Beleuchtungstechnik werden hierzu die LED Chips nicht als SMD-Bauteile eingesetzt, sondern Halbleiterchips unmittelbar auf ein Trägermaterial appliziert. Dadurch ist es auch möglich, die Packungsdichte der Bauteile wesentlich zu erhöhen. Durch die Kombination von hoher Packungsdichte und effizienter Kühlung der Chips ist es möglich, sehr hohe optische Gesamtleistungen im Bereich von Kilowatt zu erzielen.

LED Chips selbst können dabei als Lambert'sche Strahler aufgefasst werden, welche ohne zusätzliche optische Elemente oder Hilfsmittel in den Halbraum abstrahlen und somit einen Abstrahlwinkel von 180 Grad aufweisen. Soll eine hohe Gesamtleistung erzielt werden, kann eine Vielzahl von LED's zu einem Array kombiniert werden, wodurch ein Flächenstrahler gebildet wird. Die so gebildete leuchtende Fläche wirkt als Ganzes ebenfalls als Lambert'scher Strahler, so dass auf eine in einem Abstand befindliche definierte und begrenzte Arbeitsfläche nur ein Teil der zur Verfügung stehenden Strahlungsleistung trifft.

Für besondere industrielle Anwendungen ist es erforderlich, eine möglichst homogene Bestrahlung eines Arbeitsbereichs zumindest in einer ausgewählten Richtung zu erzielen, um so beispielsweise eine Photopolymerisation möglichst gleichmäßig über eine Arbeitsbreite zu ermöglichen. Hierzu ist es wünschenswert, innerhalb des Arbeitsbereichs eine möglichst konstante und homogene Verteilung der Strahlungsleistung und insbesondere zum Rand des Arbeitsbereichs hin einen möglichst steilen Abfall der Strahlungsleistung zu erhalten, so dass sich im Idealfall zumindest über die Arbeitsbreite ein rechteckförmiges Strahlungsleistungsprofil ergibt. Hierzu wird in der EP-A 1 089 069 eine lineare Anordnung von LED's vorgeschlagen, deren Anordnungsdichte zu den Enden der Linienanordnung höher wird, so dass der Abfall der gesamten Strahlungsleistung zumindest teilweise kompensiert wird. Nachteilig an der gezeigten Ausführung ist, dass eine Erhöhung der Anordnungsdichte nur innerhalb enger Grenzen möglich ist, da ansonsten eine effektive Kühlung der LED's am Rand nicht oder nur unzureichend gewährleistet werden kann. Nachteilig ist weiterhin, dass die mittlere Anordnungsdichte über die gesamte LED Linie relativ niedrig gehalten werden muss, um eine Kompensation des Randabfalls zu ermöglichen, wodurch die gesamte Strahlungsleistung des Systems niedrig ist.

Ausgehend hiervon liegt der Erfindung die Aufgabe zugrunde, die im Stand der Technik aufgetretenen Nachteile zu beheben und ein System zu schaffen, welches bei einer hohen gesamten Strahlungsleistung eine effektive Lichtlenkung auf eine vorgesehene Arbeitsfläche gewährleistet. Aufgabe ist es weiterhin, die Arbeitsfläche bzw. den gewünschten Bestrahlungsbereich mit der zur Verfügung stehenden optischen Leistung möglichst vollständig und homogen zu bestrahlen und einen steilen Randabfall zu erzielen.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, einzelnen LED-Strängen zylinderartige Linsenoptiken zuzuordnen, derart, dass auch flach abgestrahltes Licht noch umgelenkt wird. Dementsprechend wird erfindungsgemäß vorgeschlagen, dass jeder LED-Strang durch eine stabförmige Kollimatorlinse überdeckt ist, wobei die Kollimatorlinse eine längs des LED-Strangs verlaufende und diesen einschließende Aufnahmenut, eine dem Arbeitsbereich zugewandte Lichtaustrittsfläche und zwei beidseitig neben der Aufnahmenut verlaufende, von innen her auftreffendes UV-Licht zu der Lichtaustrittsfläche hin lenkende Lichtumlenkflächen aufweist. Durch die Anordnung der LEDs in einer Aufnahmenut wird das abgestrahtle Licht vollständig von den die Nut begrenzenden Lichteintrittsflächen der Kollimatorlinse erfasst. Damit ist es möglich, die zur Verfügung stehende Strahlungsleistung einschließlich der unter flachen Winkeln emittierten Randstrahlung weitgehend vollständig zu nutzen. Der letztgenannte Anteil wird hierbei mittels interner Totalreflexion an den seitlich neben dem LED-Strang verlaufenden Lichtumlenkflächen in Richtung der optischen Achse umgelenkt und steht damit ebenfalls für eine Nutzung zur Verfügung. Je nach Ausführung der LED Anordnung und der optischen Elemente kann hierdurch eine Steigerung der nutzbaren optischen Ausgangsleistung um 5% - 20% erzielt werden. Aufgrund der kollinearen Anordnung von LED-Strängen und zugehörigen Linsen ist es weiterhin möglich, die Packungsdichte der LED-Chips in den Bereich von 15 bis mehr als 30 Chips/cm² zu erhöhen, wodurch sich ebenfalls eine höhere optische Ausgangsleistung ergibt.

Eine vorteilhafte Ausgestaltung sieht vor, dass mehrere Kollimatorlinsen vorzugsweise nahtlos linear hintereinander angeordnet sind. Auf diese Weise ist es möglich, wirtschaftliche Produktionsprozesse für die Linsenherstellung einzusetzen, während die Arbeitsbreite variabel angepasst werden kann.

Eine weitere Verbesserung zur Erzielung einer kompakten Bauform sieht vor, dass mehrere seitlich nebeneinander angeordnete Kollimatorlinsen ein zusammenhängendes Kollimatormodul bilden.

Aufgrund der erforderlichen hohen optischen Leistungen und Standfestigkeit ist es von Vorteil, wenn die Kollimatorlinsen ggf. als zusammenhängendes Kollimatormodul aus einem UV-transparenten Glasmaterial, vorzugsweise als Pressformling aus Quarzglas wie Suprasil oder aus einem Borsilikatglas bestehen. Im Unterschied dazu ist es für einen Dauereinsatz nicht möglich Kunststoffmaterialien wie PMMA oder PC oder ähnliches einzusetzen, weil deren optische Transparenz insbesondere zu kurzen Wellenlängen stark abnimmt, wodurch einerseits die nutzbare optische Leistung in der Arbeitsebene stark vermindert wird und andererseits die in den optischen Elementen absorbierte Leistung zu einer thermischen oder photochemischen Zerstörung des Kunststoffes führt.

Im Hinblick auf einen modularen Einsatz ist es weiter von Vorteil, wenn mehrere seitlich nebeneinander angeordnete LED-Stränge und deren ggf. als zusammenhängendes Kollimatormodul zugeordnete Kollimatorlinsen ein einheitliches LED-Modul bilden.

Eine weitere Verbesserung lässt sich dadurch erreichen, dass mehrere LED-Module in Längsrichtung der LED-Stränge gesehen aneinander gefügt sind, wobei die LED-Module an ihren Verbindungsflächen plan ausgeführt sind oder eine Verzahnung für eine Formschlussverbindung aufweisen, so dass einzelne Module dicht aneinander gereiht werden können, um so beispielsweise eine größere Bestrahlungsfläche bzw. Eine größere Arbeitsbreite zu realisieren.

Vorteilhafterweise ist ein Linsenabschlusselement an ein freies Stirnende einer Kollimatorlinse angefügt, wobei stirnseitig aus der Kollimatorlinse austretendes Licht durch das Linsenabschlusselement zu dem Arbeitsbereich hin umgelenkt wird, um eine möglichst homogene Strahlungsverteilung und einen möglichst steilen Abfall der Strahlungsleistung an den Strangenden zu erreichen.

In diesem Zusammenhang ist es auch günstig, wenn das Linsenabschlusselement als Hälfte eines Rotationskörpers mit einer Planfläche ausgestaltet ist, wobei die Planfläche deckungsgleich zu der Stirnseite einer Kollimatorlinse ist.

Eine weitere bauliche Verbesserung sieht vor, dass die Linsenabschlusselemente benachbarter LED-Module überlappend angeordnet sind.

Vorteilhafterweise ist sind die LED-Chips in der Kollimatorlinse derart eingeschlossen, dass das von den LED-Chips emittierte UV-Licht im Wesentlichen vollständig auf die Innenflächen der Aufnahmenut trifft.

Für eine gewünschte linienförmige Bestrahlung bzw. eine hohe Packungsdichte ist es vorteilhaft, wenn die Länge der Kollimatorlinse um ein Vielfaches größer als deren maximale Querabmessung ist.

Eine symmetrische Strahlungsbündelung lässt sich dadurch erreichen, dass die Hauptabstrahlachsen der LED-Chips in einem LED-Strang eine Mittelebene der zugeordneten Kollimatorlinse aufspannen.

Die Strahlungsbündelung lässt sich in gewünschter Weise dadurch beeinflussen, dass die Lichtumlenkflächen im Außenprofil gerade oder konvex gekrümmt sind.

Für die Wärmeabfuhr bei hohen Bestrahlungsleistungen ist es von besonderem Vorteil, wenn die Trägerfläche mit einer Kühleinrichtung, insbesondere einer Wasserkühlung in thermischer Verbindung steht.

Eine weitere Verbesserung hinsichtlich einer hohen Packungsdichte ergibt sich dadurch, dass die Trägerfläche durch eine Keramikplatte gebildet ist, und dass die LED-Chips elektrisch mit Leiterbahnen auf der Keramikplatte verbunden sind.

Im Folgenden wird die Erfindung anhand der in der Zeichnung in schematischer Weise dargestellten Ausführungsbeispiele näher erläutert. Es zeigen:
- Fig. 1: eine schematische Ansicht eines UV-Bestrahlungsaggregats zur Strahlungshärtung einer Polymerschicht auf einem Substrat;
- Fig. 2: ein LED-Modul des UV-Bestrahlungsaggregats umfassend einen LED-Strang und eine zugehörige Kollimatorlinse in Draufsicht;
- Fig. 3: ein weiteres UV-Bestrahlungsaggregat mit seitlich nebeneinander angeordneten LED-Strängen und Kollimatorlinsen in einem LED-Modul;
- Fig. 4: eine Draufsicht auf das LED-Modul nach Fig. 3;
- Fig. 5 - 8: weitere Ausführungsbeispiele von aneinander gereihten LED-Modulen in Draufsicht.

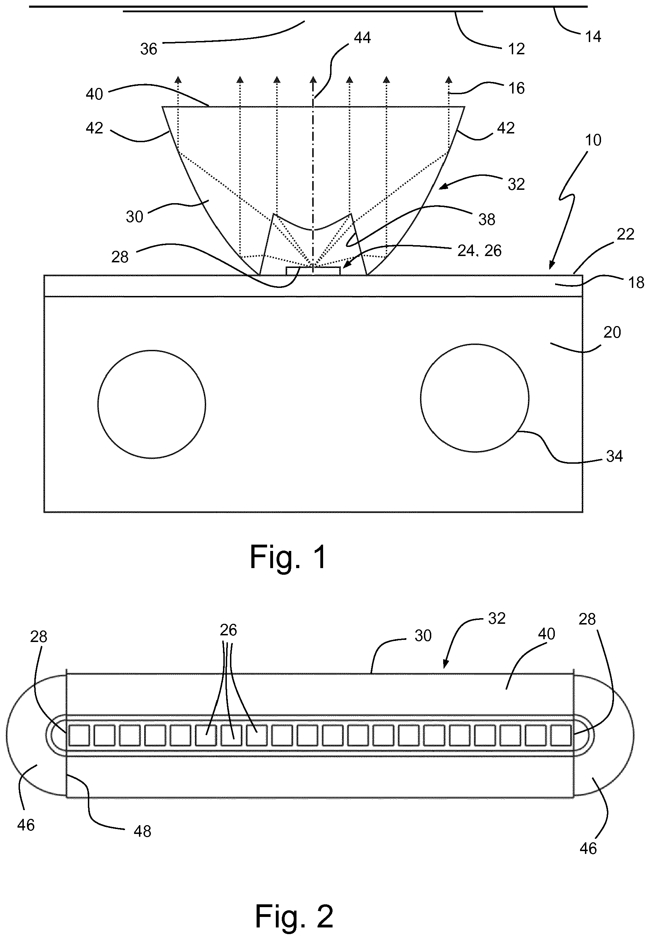

Das in Fig. 1 dargestellte Bestrahlungsaggregat 10 ermöglicht die Strahlungshärtung bzw. Vernetzung einer Polymerschicht 12 auf einem Substrat 14, beispielsweise einer Druckfarbenschicht auf einer Bedruckstoffbahn, mittels UV-Licht 16. Hierfür umfasst das Aggregat 10 eine Trägerplatte 18 auf einer Kühleinrichtung 20 sowie eine auf der freien Oberfläche 22 der Trägerplatte aufgebrachte LED-Anordnung 24 mit einer Vielzahl von im UV-Bereich emittierenden LED-Chips 26, die mindestens einen linearen LED-Strang 28 bilden, dem eine zylinderartige Kollimatorlinse 30 zugeordnet ist, wobei LED-Strang 28 und Kollimatorlinse 30 ein LED-Modul 32 bilden.

Die Kühleinrichtung 20 umfasst Kühlkanäle 34 zur Zu- und Abfuhr einer Kühlflüssigkeit, die mit der Trägerplatte 18 in Wärmeleitverbindung stehen. Zweckmäßig ist die Trägerplatte 18 als Keramikplatte ausgebildet, wobei die LED-Chips 26 als gehäuselose Halbleiterbausteine über Bonddrähte, Flip-Chip Technologie oder Ähnliches mit Leiterbahnen auf der Keramikplatte elektrisch verbunden sind (nicht gezeigt).

Wie auch aus Fig. 2 ersichtlich, sind die LED-Chips 26 in geringem Abstand zueinander in einem LED-Strang 28 kollinear angeordnet. Die jeweilige Chipgröße liegt üblicherweise im Bereich von 1mm², während die optische Ausgangsleistung jedes Chips typisch 0,5W bis 2W beträgt. Durch die Kombination von hoher Packungsdichte und effizienter Kühlung der Chips lassen sich sehr hohe optische Gesamtleistungen im Bereich von Kilowatt erzielen. Dadurch ist es möglich, eine durch den Arbeits- bzw. Bestrahlungsbereich 36 des stationären Aggregats 10 quer zu dem LED-Strang 28 bewegte Bedruckstoffbahn 14 hinreichend mit UV-Strahlung zu beaufschlagen, um die darauf befindliche Druckfarben- oder Lackschicht 12 im Durchlauf zu vernetzen.

Die LED-Chips 26 selbst können als Lambert'sche Strahler aufgefasst werden, welche ohne zusätzliche optische Elemente oder Hilfsmittel in den Halbraum abstrahlen und somit einen Abstrahlwinkel von 180 Grad aufweisen.

Um optische Verluste zu vermeiden und die zur Verfügung stehende optische Leistung möglichst vollständig und homogen in dem Arbeitsbereich 36 zu konzentrieren, ist für jeden LED-Strang 28 eine stabförmige bzw. zylinderartige Kollimatorlinse 30 vorgesehen, wie sie in Fig. 1 im Querschnitt bzw. Profil mit Strahlengang des UV-Lichts 16 gezeigt ist.

Die Kollimatorlinse 30 weist eine längs des LED-Strangs 28 verlaufende und diesen einschließende Aufnahmenut 38, eine dem Arbeitsbereich 36 zugewandte Lichtaustrittsfläche 40 und zwei beidseitig neben der Aufnahmenut 38 verlaufende Lichtumlenkflächen 42 auf. Die Aufnahmenut 38 bildet dabei zwei unterschiedliche Lichteintrittsflächen, wodurch Lichtstrahlen nahe der optischen Achse 44 über eine erste Fläche durch die Kollimatorlinse geleitet wird, während auf den Lichtumlenkflächen 42 auftreffendes UV-Licht 16 zu der Lichtaustrittsfläche 40 hin gelenkt wird. Zu diesem Zweck sind die Lichtumlenkflächen 42 in ihrem Außenprofil konvex gekrümmt oder gerade verlaufend ausgebildet, so dass durch die Ausnutzung totaler innerer Reflexion (TIR-Effekt) auch der periphere Bereich des abgestrahlten UV-Lichts 16 erfasst und in die gewünschte Richtung zu der Hauptabstrahlachse 44 der LED-Chips 26 hin abgelenkt wird. Zweckmäßig reichen die Flanken der Aufnahmenut 38 bis an die Trägerfläche 22 heran, um auch flache Abstrahlwinkel abzudecken und das von den LED-Chips 26 emittierte Licht im Wesentlichen vollständig zu erfassen.

Bei dem in Fig. 1 gezeigten Linsenprofil ist die Lichtaustrittsfläche 40 plan ausgebildet und das Licht wird in ein paralleles Strahlenbündel senkrecht zur Trägerfläche 22 kollimiert. Möglich ist es auch, dass die Lichtaustrittsfläche 40 konvex oder konkav gekrümmt ist, und dass das abgestrahlte Licht divergent oder konvergent verläuft. Grundsätzlich ist es wünschenswert, innerhalb des Arbeitsbereichs eine möglichst kontante und homogene Verteilung der Strahlungsleistung zu erhalten, so dass sich im Idealfall zumindest über die Arbeitsbreite ein rechteckförmiges Strahlungsleistungsprofil ergibt.

Wie aus Fig. 2 ersichtlich, ist die Länge der Kollimatorlinse 30 um ein Vielfaches größer als deren maximale Breite im Bereich der Lichtaustrittsfläche 40. Um auch stirnseitig aus der Kollimatorlinse 30 austretendes Licht zu dem Arbeitsbereich 36 umzulenken, ist jeweils ein Linsenabschlusselement 46 an ein freies Stirnende der Kollimatorlinse 30 angefügt. Das jeweilige Linsenabschlusselement 46 ist als Hälfte eines Rotationskörpers mit einer Planfläche 48 ausgestaltet, welche deckungsgleich zu der anliegenden Stirnseite der Kollimatorlinse 30 ist. Darüber hinaus bewirkt die Verwendung des Abschlusselements 46 einen steilen Abfall der Strahlungsintensität am stirnseitigen Ende des LED Moduls 32, wodurch die Homogenität der Strahlungsintensität über die gesamte Austrittsfläche 40 und damit im Bestrahlungsbereich 36 verbessert wird und unerwünschte Streustrahlung vermindert wird.

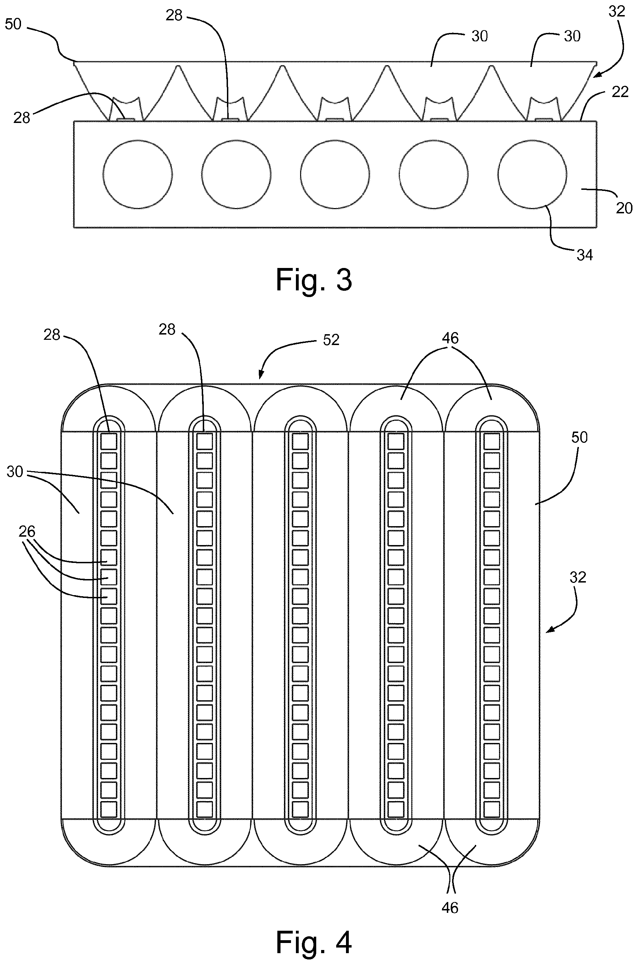

Fig. 3 und 4 zeigt ein weiteres Ausführungsbeispiel eines UV-Bestrahlungsaggregats 10, bei dem im Unterschied zu dem Beispiel nach Fig. 1 mehrere LED-Stränge 28 und zugeordnete Kollimatorlinsen 30 seitlich nebeneinander angeordnet sind und dabei ein einheitliches LED-Modul 32 mit einer flächigen Abstrahlcharakteristik bilden. Die nebeneinander angeordneten Kollimatorlinsen 30 können dabei als zusammenhängendes Kollimatormodul 50 miteinander gekoppelt sein (Fig. 4). Entsprechend sind dann auch die Linsenabschlusselemente 46 der einzelnen Kollimatorlinsen 30 über Stege als Abschlussmodule 52 miteinander verbunden.

Die Kollimatorlinsen 30 bzw. Kollimatormodule 50 bestehen aus einem UV-transparenten Material, bevorzugt aus Quarzglas. Dabei kann durch ein Pressformverfahren das gewünschte Formteil erzeugt werden. Die Abmessungen des Presslings sind dann allerdings verfahrensbedingt beschränkt. Um dennoch die bei verschiedenen Bedruckstoffen erforderlichen Materialbreiten abzudecken, beispielsweise 0,2-0,5m für Etikettendruck, 1 - 2m für Bogendruck und 0,5 - 2,5m für Verpackungsdruck, werden zweckmäßig mehrere LED-Kollimatorlinsen 30 bzw. Kollimatormodule 50 und zugehörige LED-Stränge 28 hintereinander angeordnet.

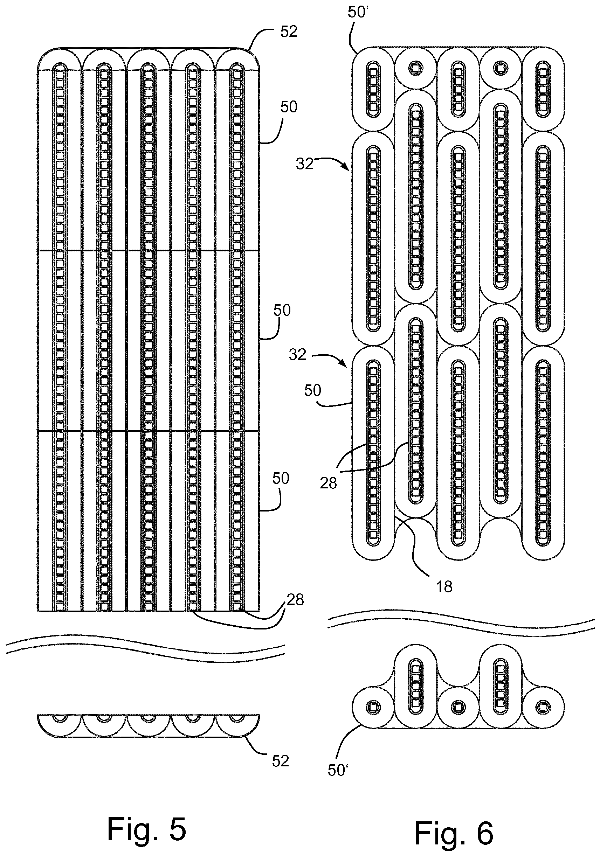

Fig. 5 zeigt ein Ausführungsbeispiel mit nahtlos linear aneinander gereihten LED-Strängen 28, wobei die Kollimatormodule 50 entsprechend kaskadiert sind und endseitige Abschlussmodule 52 vorgesehen sind, so dass eine gegenüber dem Beispiel nach Fig. 4 insgesamt verlängerte Strahleranordnung erreicht wird.

Bei dem Ausführungsbeispiel nach Fig. 6 sind mehrere LED-Module 32 als jeweilige Kombination von Träger 18, seitlich und in Längsrichtung versetzten LED-Strängen 28 und entsprechendem Kollimatormodul 50 in einer LED-Anordnung zusammengesetzt, wobei Endmodule 50' eine insgesamt rechteckige Anordnung ermöglichen. Im Unterschied zu dem Beispiel nach Fig. 5 sind die LED-Module 32 an ihren Verbindungsflächen nicht plan ausgeführt, sondern weisen eine Verzahnung für eine gegenseitige Formschlussverbindung auf.

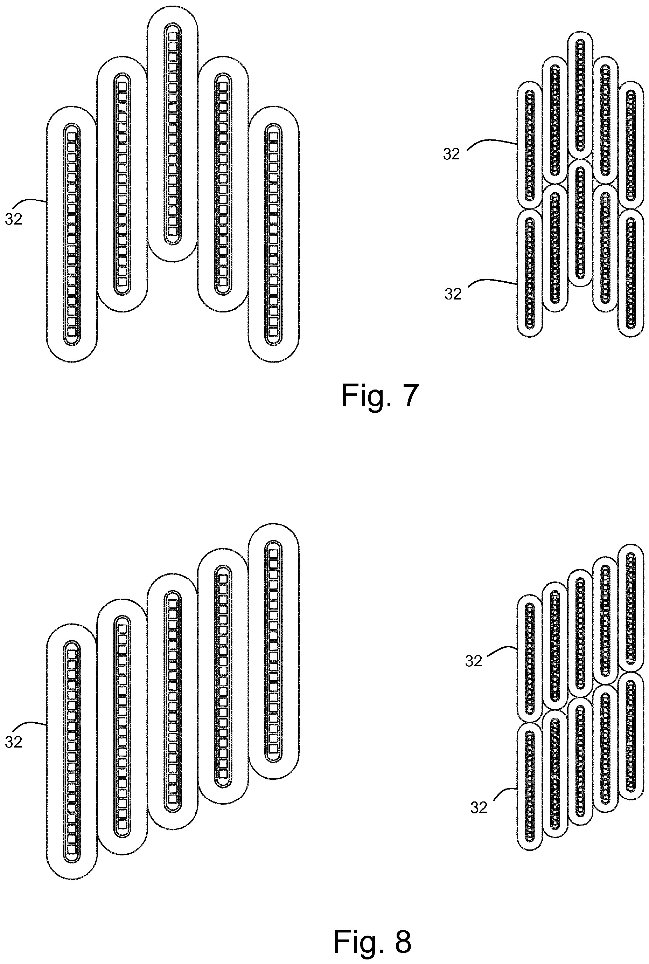

Die Fig. 7 und 8 zeigen beispielhaft weitere Konfigurationen von einzelnen LED-Modulen 32 (linke Zeichnungsseite) und deren Kombination in einer linearen Anordnung (rechte Zeichnungsseite).

## Patentansprüche

1. UV-Bestrahlungsaggregat zur Strahlungshärtung einer Polymerschicht (12), insbesondere einer auf einem Substrat (14) befindlichen Druckfarben- oder Lackschicht, mit einer auf einer Trägerfläche (22) angeordneten LED-Anordnung (24), die zur UV-Bestrahlung eines der Trägerfläche (22) gegenüberliegenden Arbeitsbereichs (36) eine Vielzahl von im UV-Bereich emittierenden, umfasst, wobei die LED-Chips (26) mindestens einen linearen LED-Strang (28) bilden, wobei jeder LED-Strang (28) durch eine stabförmige Kollimatorlinse (30) überdeckt ist, **dadurch gekennzeichnet, dass** die LED-Chips (26) gehäuselos sind und die Kollimatorlinse (30) eine längs des LED-Strangs (28) verlaufende und diesen einschließende Aufnahmenut (38), eine dem Arbeitsbereich (36) zugewandte Lichtaustrittsfläche (40) und zwei beidseitig neben der Aufnahmenut (38) verlaufende, von innen her auftreffendes UV-Licht zu der Lichtaustrittsfläche (40) hin lenkende Lichtumlenkflächen (42) aufweist, und dass mehrere seitlich nebeneinander angeordnete Kollimatorlinsen (30) ein zusammenhängendes Kollimatormodul (50) bilden.

2. UV-Bestrahlungsaggregat nach Anspruch 1, **dadurch gekennzeichnet, dass** mehrere Kollimatorlinsen (30) vorzugsweise nahtlos linear hintereinander angeordnet sind.

3. UV-Bestrahlungsaggregat nach Anspruch 1 oder 2, **dadurch gekennzeichnet, dass** die Kollimatorlinsen (30) ggf. als zusammenhängendes Kollimatormodul (50) aus einem UV-transparenten Glasmaterial, vorzugsweise als Pressformling aus Quarzglas bestehen.

4. UV-Bestrahlungsaggregat nach einem der Ansprüche 1 bis 3, **dadurch gekennzeichnet, dass** mehrere seitlich nebeneinander angeordnete LED-Stränge (28) und deren als zusammenhängendes Kollimatormodul (50) zugeordnete Kollimatorlinsen (30) ein einheitliches LED-Modul (32) bilden.

5. UV-Bestrahlungsaggregat nach Anspruch 4, **dadurch gekennzeichnet, dass** mehrere LED-Module (32) in Längsrichtung der LED-Stränge (28) gesehen aneinander gefügt sind, wobei die LED-Module (32) an ihren Verbindungsflächen plan ausgeführt sind oder eine Verzahnung für eine Formschlussverbindung aufweisen.

6. UV-Bestrahlungsaggregat nach einem der Ansprüche 1 bis 5, **dadurch gekennzeichnet, dass** ein Linsenabschlusselement (46) an ein freies Stirnende einer Kollimatorlinse (30) angefügt ist, wobei stirnseitig aus der Kollimatorlinse (30) austretendes Licht durch das Linsenabschlusselement (46) zu dem Arbeitsbereich (36) hin umgelenkt wird.

7. UV-Bestrahlungsaggregat nach Anspruch 6, **dadurch gekennzeichnet, dass** das Linsenabschlusselement (46) als Hälfte eines Rotationskörpers mit einer Planfläche ausgestaltet ist, wobei die Planfläche deckungsgleich zu der Stirnseite einer Kollimatorlinse (30) ist.

8. UV-Bestrahlungsaggregat nach einem der Ansprüche 4 bis 7, **dadurch gekennzeichnet, dass** die Linsenabschlusselemente (46) benachbarter LED-Module (32) überlappend angeordnet sind.

9. UV-Bestrahlungsaggregat nach einem der Ansprüche 1 bis 8, **dadurch gekennzeichnet, dass** das von den LED-Chips (26) eines LED-Strang (28)s emittierte UV-Licht im Wesentlichen vollständig auf die Innenflächen der Aufnahmenut (38) der zugehörigen Kollimatorlinse (30) trifft.

10. UV-Bestrahlungsaggregat nach einem der Ansprüche 1 bis 9, **dadurch gekennzeichnet, dass** die Länge der Kollimatorlinse (30) um ein Vielfaches größer als deren maximale Querabmessung ist

11. UV-Bestrahlungsaggregat nach einem der Ansprüche 1 bis 10, **dadurch gekennzeichnet, dass** die Hauptabstrahlachsen der LED-Chips (26) in einem LED-Strang (28) eine Mittelebene der zugeordneten Kollimatorlinse (30) aufspannen

12. UV-Bestrahlungsaggregat nach einem der Ansprüche 1 bis 11, **dadurch gekennzeichnet, dass** die Lichtumlenkflächen (42) im Außenprofil gerade oder konvex gekrümmt sind

13. UV-Bestrahlungsaggregat nach einem der Ansprüche 1 bis 12, **dadurch gekennzeichnet, dass** die Tragerflache (22) mit einer Kühleinrichtung (20), insbesondere einer Wasserkühlung in thermischer Verbindung steht.

14. UV-Bestrahlungsaggregat nach einem der Ansprüche 1 bis 13, **dadurch gekennzeichnet, dass** die Trägerfläche (22) durch eine Keramikplatte (18) gebildet ist, und dass die LED-Chips (26) elektrisch mit Leiterbahnen auf der Keramikplatte (18) verbunden sind.

## Claims

1. UV irradiation unit for radiation curing of a polymer layer (12), in particular a layer of printing ink or paint on a substrate (14), the unit comprising an LED assembly (24) which is arranged on a support surface (22) and comprises a plurality of LED chips, emitting in the UV range, for UV irradiation of a working region (36) opposite the support surface (22), the LED chips (26) forming at least one linear LED strand (28), each LED strand (28) being covered by a rod-shaped collimator lens (30), **characterized in that** the LED chips (26) are without a casing and the collimator lens (30) has a receiving groove (38) which extends along and encloses the LED strand (28), a light exit surface (40) facing the working region (36), and two light-deflecting surfaces (42) which extend on either side of and alongside the receiving groove (38) and deflect UV light that is incident on the inside to the light exit surface(40), and **in that** a plurality of laterally adjacently arranged collimator lenses (30) form a contiguous collimator module (50).

2. UV irradiation unit according to claim 1, **characterized in that** a plurality of collimator lenses (30) are preferably arranged seamlessly one behind the other in a linear manner.

3. UV irradiation unit according to either claim 1 or claim 2, **characterized in that** the collimator lenses (30), in the form of a contiguous collimator module (50) where appropriate, consist of a UV-transparent glass material, preferably as a press-molded body of quartz glass.

4. UV irradiation unit according to any of claims 1 to 3, **characterized in that** a plurality of laterally adjacently arranged LED strands (28) and the collimator lenses (30) thereof that are associated as a contiguous collimator module (50) form a homogeneous LED module (32).

5. UV irradiation unit according to claim 4, **characterized in that,** when viewed in the longitudinal direction of the LED strands (28), a plurality of LED modules (32) are joined together, the LED modules (32) being designed so as to have planar connecting surfaces or so as to have a toothing for an interlocking connection.

6. UV irradiation unit according to any of claims 1 to 5, **characterized in that** a lens terminating element (46) is joined to a free end face of a collimator lens (30), with light exiting the end face of the collimator lens (30) being deflected by the lens terminating element (46) to the working region (36).

7. UV irradiation unit according to claim 6, **characterized in that** the lens terminating element (46) is in the form of half a rotating body having a planar surface, the planar surface being congruent with the end face of a collimator lens (30).

8. UV irradiation unit according to any of claims 4 to 7, **characterized in that** the lens terminating elements (46) of adjacent LED modules (32) are arranged so as to overlap.

9. UV irradiation unit according to any of claims 1 to 8, **characterized in that** the UV light emitted by the LED chips (26) of an LED strand (28) is incident substantially entirely on the inner faces of the receiving groove (38) of the associated collimator lens (30).

10. UV irradiation unit according to any of claims 1 to 9, **characterized in that** the length of the collimator lens (30) is many times greater than the maximum transverse dimension thereof.

11. UV irradiation unit according to any of claims 1 to 10, **characterized in that** the main emission axes of the LED chips (26) in an LED strand (28) span a central plane of the associated collimator lens (30).

12. UV irradiation unit according to any of claims 1 to 11, **characterized in that** the light deflection surfaces (42) have outer profiles which are straight or convexly curved.

13. UV irradiation unit according to any of claims 1 to 12, **characterized in that** the support surface (22) is thermally connected to a cooling device (20), in particular a water cooling system.

14. UV irradiation unit according to any of claims 1 to 13, **characterized in that** the support surface (22) is formed by a ceramic plate (18) and **in that** the LED chips (26) are electrically connected to conductor tracks on the ceramic plate (18).

## Revendications

1. Unité d'irradiation UV pour le durcissement par rayonnement d'une couche de polymère (12), en particulier d'une couche d'encre ou de laque sur un substrat (14), comportant un dispositif de DEL (24) disposé sur une surface de support (22), lequel dispositif comprend, pour l'irradiation UV d'une zone de travail (36) opposée à la surface de support (22), une pluralité de émettant dans la région UV, les puces DEL (26) formant au moins une chaîne de DEL (28) linéaire, chaque chaîne de DEL (28) étant recouverte d'une lentille de collimation (30) en forme de barre, **caractérisée en ce que** les puces DEL (26) ne sont pas encapsulées et la lentille de collimation (30) présente une rainure de réception (38) s'étendant le long de la chaîne de DEL (28) et entourant cette dernière, une surface de sortie de lumière (40) orientée vers la zone de travail (36) et deux surfaces de déviation de lumière (42) s'étendant des deux côtés près de la rainure de réception (38) et dirigeant de l'intérieur la lumière UV incidente vers la surface de sortie de lumière (40), et **en ce que** plusieurs lentilles de collimation (30) disposées latéralement côte à côte forment un module de collimation (50) d'un seul tenant.

2. Unité d'irradiation UV selon la revendication 1, **caractérisée en ce que** plusieurs lentilles de collimation (30) sont de préférence disposées linéairement sans soudure les unes derrière les autres.

3. Unité d'irradiation UV selon la revendication 1 ou 2, **caractérisée en ce que** les lentilles de collimation (30) sont formées éventuellement comme un module de collimation (50) d'un seul tenant en matériau vitreux transparent aux UV, de préférence comme une pièce moulée par pressage en verre quartzeux.

4. Unité d'irradiation UV selon l'une des revendications 1 à 3, **caractérisée en ce qu'**une pluralité de chaînes de DEL (28) disposées latéralement côte à côte, et **en ce que** leurs lentilles de collimation (30) associées comme module de collimation (50) d'un seul tenant forment un module DEL (32) uniforme.

5. Unité d'irradiation UV selon la revendication 4, **caractérisée en ce que** plusieurs modules DEL (32) sont assemblés les uns aux autres dans la direction longitudinale des chaînes de DEL (28), les modules DEL (32) étant réalisés de manière plane au niveau de leurs surfaces d'assemblage ou présentant une denture pour une connexion par complémentarité de forme.

6. Unité d'irradiation UV selon l'une des revendications 1 à 5, **caractérisée en ce qu'**un élément de fermeture de lentille (46) est fixé à une extrémité avant libre d'une lentille de collimation (30), la lumière sortant de la lentille de collimation (30) au niveau du côté avant étant déviée vers la zone de travail (36) par l'élément de fermeture de lentille (46).

7. Unité d'irradiation UV selon la revendication 6, **caractérisée en ce que** l'élément de fermeture de lentille (46) est conçu sous la forme d'une moitié d'un corps de rotation comportant une surface plane, la surface plane étant congruente avec la face avant d'une lentille de collimation (30).

8. Unité d'irradiation UV selon l'une des revendications 4 à 7, **caractérisée en ce que** les éléments de fermeture de lentille (46) de modules DEL (32) adjacents sont disposés de manière chevauchante.

9. Unité d'irradiation UV selon l'une des revendications 1 à 8, **caractérisée en ce que** la lumière UV émise pars les puces DEL (26) d'une chaîne de DEL (28) rencontre de manière sensiblement complète les surfaces intérieures de la rainure de réception (38) de la lentille de collimation (30) correspondante.

10. Unité d'irradiation UV selon l'une des revendications 1 à 9, **caractérisée en ce que** la longueur de la lentille de collimation (30) est considérablement supérieure à sa dimension transversale maximale.

11. Unité d'irradiation UV selon l'une des revendications 1 à 10, **caractérisée en ce que** les principaux axes d'émission des puces DEL (26) dans une chaîne de DEL (28) définissent un plan médian de la lentille de collimation (30) associée.

12. Unité d'irradiation UV selon l'une des revendications 1 à 11, **caractérisée en ce que** les surfaces de déviation de lumière (42) sont, en profil externe, droites ou courbées de façon convexe.

13. Unité d'irradiation UV selon l'une des revendications 1 à 12, **caractérisée en ce que** la surface de support (22) est en liaison thermique avec un dispositif de refroidissement (20), en particulier avec un refroidissement par eau.

14. Unité d'irradiation UV selon l'une des revendications 1 à 13, **caractérisée en ce que** la surface de support (22) est formée par une plaque en céramique (18), et **en ce que** les puces DEL (26) sont reliées électriquement à des pistes conductrices sur la plaque en céramique (18).
